(19) **Europäisches Patentamt / European Patent Office / Office européen des brevets**

(11) **EP 3 969 251 B1**

(12) **EUROPEAN PATENT SPECIFICATION**

(45) Date of publication and mention
of the grant of the patent:
**20.08.2025 Bulletin 2025/34**

(21) Application number: **20724130.8**

(22) Date of filing: **11.05.2020**

(51) International Patent Classification (IPC):
*B29C 48/156* (2019.01)    *B29C 48/285* (2019.01)
*B32B 5/02* (2006.01)    *B32B 5/26* (2006.01)
*B29C 70/20* (2006.01)    *B29C 70/52* (2006.01)
*B29K 21/00* (2006.01)    *B29K 23/00* (2006.01)
*B29K 105/00* (2006.01)    *B29K 105/10* (2006.01)
*B29L 7/00* (2006.01)

(52) Cooperative Patent Classification (CPC):
**B29C 48/2886; B29C 48/156; B32B 5/024;**
**B32B 5/26;** B29C 48/0011; B29C 48/0022;
B29C 48/08; B29C 48/906; B29C 48/91;
B29C 48/9135; B29C 48/914; B29C 48/919;
B29C 70/20; B29C 70/52; B29C 2793/0027;
(Cont.)

(86) International application number:
**PCT/EP2020/063052**

(87) International publication number:
**WO 2020/229410 (19.11.2020 Gazette 2020/47)**

(54) **PROCESS FOR PRODUCTION OF FIBER REINFORCED TAPE**

VERFAHREN ZUR HERSTELLUNG EINES FASERVERSTÄRKTEN BANDES

PROCÉDÉ DE PRODUCTION DE BANDE RENFORCÉE PAR DES FIBRES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.05.2019 EP 19174028**

(43) Date of publication of application:
**23.03.2022 Bulletin 2022/12**

(73) Proprietor: **SABIC Global Technologies B.V.**
**4612 PX Bergen op Zoom (NL)**

(72) Inventors:
• **MV, Supriya**
**6160 GA Geleen (NL)**
• **PATHAM, Bhaskar**
**6160 GA Geleen (NL)**

• **SALES - FERNANDEZ, Jose**
**6160 GA Geleen (NL)**
• **YUAN, Qin**
**6160 GA GELEEN (NL)**
• **HEESSELS, Frank**
**6160 GA GELEEN (NL)**
• **TUFANO, Carmela**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
EP-A1- 3 272 506      WO-A1-2019/022823
WO-A1-2019/122318    US-A- 3 873 389
US-A- 3 993 726      US-A- 4 883 625
US-A1- 2014 300 028    US-A1- 2016 279 833

(52) Cooperative Patent Classification (CPC): (Cont.)
B29C 2793/009; B29K 2021/003; B29K 2023/12;
B29K 2105/0094; B29K 2105/106; B29L 2007/007;
B32B 2262/0253; B32B 2605/08

**Description**

The present invention relates to a process for the production of a fiber reinforced tape. The invention further relates to such tape, to a laminate or a woven fabric prepared from said tape, to an article comprising said tape or said laminate or woven fabric and to the use of said tape and laminate and woven fabric in applications, such as automotive applications.

Introduced more than a half century ago, fibre-reinforced plastics are composite materials with a wide range of applications in industry, for example in the automotive industry. The term "composite" can apply to any combination of individual materials, for example to a thermoplastic polymer (the matrix) in which fibres (reinforcing filler) have been dispersed. The reinforced plastics industry has used glass fibres in different forms for reinforcing polymer matrices to produce a diversity of products.

In the production of short glass fibre compositions or compounds, chopped strands of pre-determined length are mixed with a thermoplastic polymer in an extruder, during which the integrity of the glass fibre strands is destroyed and the glass fibres are dispersed throughout the molten thermoplastic polymer; due to fibre breakage the fibre length is decreased during this process, typically to well below 1 mm. Long glass fibre-reinforced polymer compositions contain glass fibres having a length of at least 1 mm, often at least 2 mm and typically between 5 and 20 mm. As a result, glass fibres in moulded articles made from long glass fibre-reinforced polymer compositions generally are of higher length than in articles made from short glass fibre compositions, resulting in better mechanical properties. For that reason long glass fibre-reinforced polymer compositions are preferred for applications wherein good mechanical properties are necessary.

However, reinforcement of a thermoplastic polymer by using glass adds a lot of weight to an article, since the thermoplastic polymer generally has a lower density than glass. In order to be able to prepare light weight articles, which still have sufficient strength, in recent years, long glass fibre-reinforced tapes have been introduced into the market to allow for the production of light-weight articles with sufficient strength due to the use of the reinforcing tape.

A special class of tapes are unidirectional tapes, which are tapes that have fibers that extend substantially in the longitudinal direction. Such unidirectional tapes are typically used to prepare articles having properties that vary in one or more directions or dimensions.

Examples of unidirectional glass fiber tapes are known from WO2016/142784A1 or US3993726A.

WO2016/142784A1 discloses a fiber-reinforced composite comprising:

a matrix material including a thermoplastic material; and
a non-woven fibrous region comprising a plurality of continuous fibers dispersed in the matrix material;
wherein the width and the length of the non-woven fibrous region are substantially equal to the width and the length, respectively, of the fiber-reinforced composite;
wherein the non-woven fibrous region has a mean relative fiber area coverage (RFAC) (%) of from 65 to 90 and a coefficient of variance (COV) (%) of from 3 to 20; and wherein each of the plurality of continuous fibers is substantially aligned with the length of the fiber-reinforced composite.

Unidirectional composite fiber prepregs are for example described in WO2011/163365 A2 and composite fiber profiles are for example described in WO2011/156693 A2.

Reinforced composites from thermoplastic materials combine the stiffness provided by the reinforcement with the advantageous properties of a thermoplastic material, such as easy molding and plying of the material above a certain temperature and solidification below that temperature.

There is a need in the art for providing a unidirectional glass fiber tape in an efficient manner.

It is an object of the invention to provide a unidirectional glass fiber tape in an effieicnt manner.

This object is achieved by a process for the production of a tape comprising a plurality of impregnated continuous multifilament strands and a polymer sheath which intimately surrounds the plurality of impregnated continuous multifilament strands,

wherein each of the plurality of impregnated multifilament strands extends in the longitudinal direction,
wherein each of the plurality of impregnated continuous multifilament strands comprises at least one continuous glass multifilament strand, wherein the at least one continuous glass multifilament strand is impregnated with an impregnating agent, wherein the process comprising the steps of

a) unwinding from a package the continuous glass multifilament strands,
b) applying the impregnating agent to the continuous glass multifilament strands to form the plurality of impregnated continuous multifilament strands,
c) placing the plurality of impregnated continuous multifilament strands in parallel alignment in the longitudinal direction and

d) applying a sheath of a thermoplastic polymer composition around the plurality of impregnated continuous multifilament strands of step c) to form the tape,

wherein steps c) and d) are performed in a die having a guiding means arranged for placing the plurality of impregnated continuous multifilament strands in parallel alignment in the longitudinal direction, wherein the plurality of impregnated continuous multifilament strands pass through a melt of the thermoplastic polymer composition inside of the die downstream of the guiding means.

According to the present invention, a sheath is applied around a group of parallel impregnated continuous multifilament strands. The process advantageously provides a tape by a simple process with a small number of steps.

The number of the impregnated continuous multifilament strands in the plurality of the impregnated continuous multifilament strands used in the process according to the present invention is preferably at least 4, for example the number of impregnated continuous multifilament strands in the plurality of the impregnated continuous multifilament strands is in the range between 4 to 40, preferably in the range between 4 to 24.

Steps a)-b) are described in detail in WO2009/080281A1.

Before the sheath is applied in step d), the impregnated strands are placed in parallel alignment in step c) preferably in one plane, wherein preferably the distance between adjacent strands is essentially the same and/or for example the distance between adjacent strands is in the range from 0.20 to 2.3 mm. "Essentially the same" means the distance between adjacent strands does not differ for more than 8 %. This is preferably performed in a die arranged for the parallel alignment of strands as well as the application of sheath.

Accordingly, preferably, steps c) and d) are performed in a die having a guiding means arranged for placing the plurality of impregnated continuous multifilament strands in parallel alignment in the longitudinal direction, wherein the plurality of impregnated continuous multifilament strands pass through a melt of the thermoplastic polymer composition inside of the die downstream of the guiding means.

In some embodiments, the guiding means is provided with a plurality of extended holes in parallel alignment in the longitudinal direction and arranged in one plane, wherein each of the extended holes is arranged for accommodating one impregnated continuous multifilament strand. In such embodiments, a precise parallel arrangement of the impregnated strands in the final tape is ensured and a good product exterior is also ensured. Moreover, the breakage of the impregnated strands due to friction with each other is avoided. It is further ensured that the thermoplastic polymer composition is present between impregnated continuous multifilament strands.

According to the invention, the guiding means is provided with one extended hole having an elliptical cross section, wherein the extended hole is arranged for accommodating the plurality of impregnated continuous multifilament strands in one plane. This has an advantage that the manufacturing of such guiding means is easy.

According to the invention, it is ensured by step c) that the strands are in the desired arrangement in the final tape before the step of applying the sheath. It is however possible that the plurality of continuous glass multifilament strands are already arranged in parallel alignment before the application of the impregnating agent e.g. by means of a guiding system upstream of the die for the application of the impregnating agent, wherein preferably the plurality of continuous glass multifilament strands is in one plane, wherein preferably the distance between the adjacent strands is essentially the same, for example the distance between the adjacent strands is in the range between 0.20 to 2.3 mm. "Essentially the same" means the distance between adjacent strands does not differ for more than 8 %. This may assist in ensuring that the strands are in parallel arrangement in step c). It is also possible that the plurality of continuous glass multifilament strands are arranged in parallel alignment in the die for the application of the impregnating agent, wherein preferably the plurality of continuous glass multifilament strands is in one plane, wherein preferably the distance between the adjacent strands is essentially the same, for example the distance between the adjacent strands is in the range between 0.20 to 2.3 mm. "Essentially the same" means the distance between adjacent strands does not differ for more than 8 %.

The tape obtained by step d) may be subjected to the step e) of applying pressure and optional heat for adjusting the thickness of the tape and compacting the tape.

Step e) is preferably performed by the steps of

e1) applying pressure on while optionally heating the tape and
e2) cooling and solidifying the product obtained by step e1), e.g. by chill rolls, a water bath, a blower a fan or a high speed air knife,

Step e1) is preferably performed by sequential steps of

e1a) maintaining the tape of step d) in its melted state, e.g. by subjecting the tape of step d) to an elevated temperature, e.g. by hot rolls, flat belts, an oven or a belt press and
e2a) applying pressure on the tape obtained by step d) to adjust the thickness of the tape and compact the tape, e.g. by calendaring rolls.

Step e1a) improves the impregnation of the thermoplastic polymer into the impregnated continuous multifilament strands, which results in improved tape properties.

Examples of units for performing step e1a) include hot rolls, flat belts, an oven and a belt press. The use of hot rolls for step e1a) has an advantage that it can be performed at a high speed. The advantage of using flat belts or belt press is that the tape directly contact with the belt to achieve a good heat transfer, which results in a better impregnation. In case step e1b) is performed at a lower temperature than step e1a), . the impregnation of the impregnated continuous multifilament strands in the thermoplastic polymer may be improved. This step e) further results in tapes with improved properties, for example it may result in tapes having a good surface quality and/or may improve the mechanical properties of the tape.. The solidified shape of the tape achieved after step e2 allows for further processing or handling of the tape. This can be performed using chill rolls, which advantageously achieves a relatively slow cooling to reduce shrinkage. Some other possible cooling methods are water bath, blower, fan, high speed air knife, etc. These technologies can reach fast cooling, especially water bath.

The process may further comprise the step f) of cutting the tape obtained by step e) into desired length, which may be stacked or wound.

Preferably, the tape obtained by step d) is subjected to step e) without cutting.

In these embodiments, the steps for making the tape a)-d) and steps e) are performed in one manufacturing system. The process can be performed as a continuous process, i.e. the continuous glass multifilament strands are continuously unwound for use in the process as the tape with improved properties is formed continuously by the process.

Compared to a process where the tape obtained by step d) is cut into desired length and then subjected to a step of improving its mechanical properties, the continuous process is easier to operate since it does not require many separate procedures. This results in a lower manufactruing cost. Moreover, the variations in the properties of tapes produced by the continuous process, such as tensile, flexural and impact properties, are small.

Preferably, the process of the invention involves no cutting until the tape of step d) is formed. Accordingly, preferably, the continuous glass multifilament strands unwound in step a) and the impregnated continuous multifilament strands formed in step b) are not cut during steps a)-d).

In other embodiments, the tape obtained by step d) may be cut into desired length. Accordingly, the process may further comprise the step g) of cutting the tape obtained by step d) into desired length.

The cut tape obtained by step g) may be subjected to heat and pressure for improving its mechanical properties, in a similar manner as step e) described above. Accordingly, in some embodiments, the process further comprises the step h) of applying heat and pressure to the tape obtained by step g) in the plane direction preferably by sequential steps of

g1) heating and applying pressure on the tape and

g2) cooling and solidifying the product obtained by step g1), e.g. by chill rolls, a water bath, a blower a fan or a high speed air knife, wherein g1) is preferably performed by sequential steps of
g1a) melting the tape of step d), e.g. by hot rolls, flat belts, an oven or a belt press and g2a) applying pressure on the product obtained by step g1a), e.g. by calendaring rolls.

In another aspect, the invention relates to a tape obtained or obtainable by the process of the invention.

In another aspect, the invention relates to a laminate of a plurality of tapes of the invention. Within the framework of the invention, with 'laminate' is meant an arrangement in which at least two plies (layers) of the tapes of the invention are present. For example, such laminate contains 2, 3, 4, 5, 6, 7, 8, 9, 10, or more plies, wherein one ply consists of the tape of the invention. For example, in the laminate, the plies may be positioned such that their respective sheathed continous multifilament strands are not parallel to each other. In case their respective sheathed continous multifilament strands are positioned in relation to one other in a substantially 90° angle, such laminate is usually referred to as cross-ply. Laminates of the invention can for example be assembled or processed into two-dimensional or three-dimensional structures, such as, for example, via winding and/or lay-up techniques.

In another aspect, the invention relates to a woven fabric made of a plurality of tapes of the invention. Any known methods for weaving tapes into a woven fabric may be used.

In another aspect, the invention relates to an article comprising the tape of the invention, the consolidated laminate of the invention or the woven fabric of the invention.

The tapes, laminates, woven factics or articles of the invention can for example be used in an automotive application.

It has been found that the impact energy per unit of thickness is higher for the tapes according to the invention which contain wax (impregnating agent) as compared to the tapes which do not have wax in their composition. In addition, the E-modulus (also known as Young's modulus or stiffness) may be increased by the tapes of the invention as well.

Therefore, for tapes according to the invention, the impact energy per unit of thickness as measured according to the method as described herein is higher as compared to tapes from a plurality of sheathed continuous multifilament strands having a core that is not impregnated with an impregnating agent.

In the context of the invention with 'tape' is meant an object whose thickness is very thin in relation to its length and width. That is, the tape has a high width to thickness ratio. Typically the width of a tape is between 1-1500 times, for example 2-100 times larger than the thickness. The length of the tape can be indefinite. The tape may have a rectangular cross-, but may also have profiled sections (corrugated, ribbed etc.).

Typically, the tape obtained by step d) has a thickness in the range from 0.1 to 10 mm, for example 0.8 to 4 mm, and/or a width in the range from 1 to 4000 mm, for example 10 to 400 mm, for exampe 3 to 50 mm.

Typically, the tape obtained by step e) or step g) has a thickness in the range from 0.1 to 10 mm, for example 0.5 to 3 mm, and/or a width in the range from 1 to 4000 mm, for example 10 to 400 mm, for exampe 3 to 50 mm.

In the context of the invention with 'extends in the longitudinal direction' is meant 'oriented in the direction of the long axis of the impregnated continuous multifilament strand.

The impregnated continuous multifilament strand is prepared from a continuous glass multifilament strand and an impregnating agent.

The term intimately surrounding as used herein is to be understood as meaning that the polymer sheath substantially entirely contacts the plurality of impregnated continuous multifilament strands. Said in another way the sheath is applied in such a manner onto the plurality of impregnated continuous multifilament strandsthat there is no deliberate gap between an inner surface of the sheath and the impregnated continuous mutifilament strands.

Glass fibres are generally supplied as a plurality of continuous, very long filaments, and can be in the form of strands, rovings or yarns. A filament is an individual fibre of reinforcing material. A strand is a plurality of bundled filaments. Yarns are collections of strands, for example strands twisted together. A roving refers to a collection of strands wound into a package.

For purpose of the invention, a glass multifilament strand is defined as a plurality of bundled glass filaments.

Glass multifilament strands and their preparation are known in the art.

The filament density of the continuous glass multifilament strand may vary within wide limits. For example, the continuous glass multifilament strand may have at least 500, for example at least 1000 glass filaments/strand and/or at most 10000, for example at most 5000 grams per 1000 meter. Preferably, the amount of glass filaments/strands is in the range from 500 to 10000grams per 1000 meterglass filaments/strand.

The thickness of the glass filaments is preferably in the range from 5 to 50 $\mu$m, more preferably from 10 to 30 $\mu$m, even more preferably from 15 to 25 $\mu$m. Usually the glass filaments are circular in cross section meaning the thickness as defined above would mean diameter. The glass filaments are generally circular in cross section.

The length of the glass filaments is in principle not limited as it is substantially equal to the length of the sheathed continuous multifilament strand. For practical reasons of being able to handle the tape however, it may be necessary to cut the sheathed continuous multifilament strand into a shorter strand. For example the length of the sheathed continuous multifilament strand is at least 1 m, for example at least 10 m, for example at least 50 m, for example at least 100m, for example at least 250 m, for example at least 500m and/or for example at most 25 km, for example at most 10km.

Preferably, the continuous glass multifilament strand in the tape of the invention comprises at most 2 wt%, preferably in the range from 0.10 to 1wt% of a sizing based on the continuous glass multifilament strand. The amount of sizing can be determined using ISO 1887:2014.

A sizing composition is typically applied to the glass filaments before the glass filaments are bundled into a continuous glass multifilament strand.

Suitable examples of sizing compositions include solvent-based compositions, such as an organic material dissolved in aqueous solutions or dispersed in water and melt- or radiation cure-based compositions. Preferably, the sizing composition is an aqueous sizing composition.

As described in the art, e.g. in documents EP1460166A1 , EP0206189A1 or US4338233, the aqueous sizing composition may include film formers, coupling agents and other additional components.

The film formers are generally present in effective amount to protect fibres from interfilament abrasion and to provide integrity and processability for fibre strands after they are dried. Suitable film formers are miscible with the polymer to be reinforced. For example; for reinforcing polypropylenes, suitable film formers generally comprise polyolefin waxes.

The coupling agents are generally used to improve the adhesion between the matrix thermoplastic polymer and the fibre reinforcements. Suitable examples of coupling agents known in the art as being used for the glass fibres include organofunctional silanes. More particularly, the coupling agent which has been added to the sizing composition is an aminosilane, such as aminomethyl- trimethoxysilane, N-(beta-aminoethyl)-gamma-aminopropyl-trimethoxysilane, gamma-aminopropyltrimethoxysilane gamma-methylaminopropyl- trimethoxysilane, delta-aminobutyl-triethoxysilane, 1 ,4-aminophenyl- trimethoxysilane. Preferably, in the tape of the invention, the sizing composition contains an aminosilane to enable a good adhesion to the thermoplastic matrix. The sizing composition may further comprise any other additional components known to the person skilled in the art to be suitable for sizing compositions. Suitable examples include but are not limited to lubricants (used to prevent damage to the strands by abrasion) antistatic agents, crosslinking agents, plasticizers, surfactants, nucleation agents, antioxidants, pigments as well as mixtures thereof.

Typically, after applying the sizing composition to the glass filaments, the filaments are bundled into the continuous glass multifilament strands and then wound onto bobbins to form a package.

In the tape of the invention, the impregnated continuous multifilament strand is prepared from a continuous glass multifilament strand and an impregnating agent and in particular by applying an impregnating agent to the continuous glass multifilament strand preferably in an amount from 0.50 to 18.0 wt%, for example from 0.5 to 10.0 wt% or for example from 10.0 to 18.0 wt%based on the sheathed continuous multifilament strands.

The optimal amount of impregnating agent applied to the continuous glass multifilament strand depends on the polymer sheath, on the size (diameter) of the glass filaments forming the continuous glass strand, and on the type of sizing composition. Typically, the amount of impregnating agent applied to the continuous glass multifilament strand is for example at least 0.50 wt%, preferably at least 1.0wt%, preferably at least 1.5wt%, preferably at least 2wt%, preferably at least 2.5 wt% and/or at most 10.0wt%, preferably at most 9.0 wt%, more preferably at most 8.0 wt%, even more preferably at most 7.0 wt%, even more preferably at most 6.0wt%, even more preferably at most 5.5wt%, or for example at least 10.0 wt%, preferably at least 11wt%, preferably at least 12wt% and/or at most 18 wt%, preferably at most 16 wt%, preferably at most 14% based on the amount of sheathed continuous multifilament strands. Preferably, the amount of impregnating agent is in the range from 1.5 to 8wt%, even more preferably in the range from 2.5 wt% to 6.0 wt% based on the sheathed continuous multifilament strand. A higher amount of impregnating agent increases the Impact Energy per unit of thickness (J/mm). However, for reasons of cost-effectiveness and low emissions (volatile organic compounds) and mechanical properties, the amount of impregnating agent should also not become too high.

For example, the ratio of impregnating agent to continuous glass multifilament strand is in the range from 1:4 to 1:30, preferably in the range from 1:5 to 1:20.

Preferably, the viscosity of the impregnating agent is in the range from 2.5 to 200cSt at 160°C, more preferably at least 5.0 cSt, more preferably at least 7.0 cSt and/or at most 150.0 cSt, preferably at most 125.0 cSt, preferably at most 100.0cSt at 160°C.

An impregnating agent having a viscosity higher than 100 cSt is difficult to apply to the continuous glass multifilament strand. Low viscosity is needed to facilitate good wetting performance of the fibres, but an impregnating agent having a viscosity lower than 2.5 cSt is difficult to handle, e.g., the amount to be applied is difficult to control; and the impregnating agent could become volatile. For purpose of the invention, unless otherwise stated, the viscosity of the impregnating agent is measured in accordance with ASTM D 3236-15 (standard test method for apparent viscosity of hot melt adhesives and coating materials, Brookfield viscometer Model RVDV 2, #27 spindle, 5 r/min) at 160°C.

Preferably, the melting point of (that is the lowest melting temperature in a melting temperature range) the impregnating agent is at least 20°C below the melting point of the thermoplastic polymer composition. More preferably, the impregnating agent has a melting point of at least 25 or 30°C below the melting point of the thermoplastic polymer composition. For instance, when the thermoplastic polymer composition has a melting point of about 160°C, the melting point of the impregnating agent may be at most about 140°C.

Suitable impregnating agents are compatible with the thermoplastic polymer to be reinforced, and may even be soluble in said polymer. The skilled man can select suitable combinations based on general knowledge, and may also find such combinations in the art.

Suitable examples of impregnating agents include low molar mass compounds, for example low molar mass or oligomeric polyurethanes, polyesters such as unsaturated polyesters, polycaprolactones, polyethyleneterephthalate, poly(alpha-olefins), such as highly branched polyethylenes and polypropylenes, polyamides, such as nylons, and other hydrocarbon resins.

For reinforcing polypropylenes, the impregnating agent preferably comprises highly branched poly(alpha-olefins), such as highly branched polyethylenes, modified low molecular weight polypropylenes, mineral oils, such as, paraffin or silicon and any mixtures of these compounds.

The impregnating agent preferably comprises at least 20wt%, more preferably at least 30wt%, more preferably at least 50wt%, for example at least 99.5wt%, for example 100wt% of a branched poly(alpha-olefin), most preferably a branched polyethylene. To allow the impregnating agent to reach a viscosity of from 2.5 to 200cSt at 160°C, the branched poly(alpha-olefin) may be mixed with an oil, wherein the oil is chosen from the group consisting of of mineral oils, such as a paraffin oil or silicon oil; hydrocarbon oils; and any mixtures thereof.

Preferably, the impregnating agent is non-volatile, and/or substantially solvent-free. In the context of the present invention, non-volatile means that the impregnating agent has a boiling point or range higher than the temperatures at which the impregnating agent is applied to the continuous multifilament glass strand. In the context of present invention, "substantially solvent-free" means that impregnating agent contains less than 10 wt% of solvent, preferably less than 5wt% of solvent based on the impregnating agent. In a preferred embodiment, the impregnating agent does not contain any organic solvent.

The impregnating agent may further be mixed with other additives known in the art.

Suitable examples include lubricants; antistatic agents; UV stabilizers; plasticizers; surfactants; nucleation agents; antioxidants; pigments; dyes; and adhesion promoters, such as a modified polypropylene having maleated reactive groups; and any combinations thereof, provided the viscosity remains within the desired range. Any method known in the art may be used for applying the liquid impregnating agent to the continuous glass multifilament strand. The application of the liquid impregnating agent may be performed using a die. Other suitable methods for applying the impregnating agent to the continuous multifilament strands include applicators having belts, rollers, and hot melt applicators. Such methods are for example described in documents EP0921919B1 EP0994978B1 , EP0397505B1, WO2014/053590A1 and references cited therein. The method used should enable application of a constant amount of impregnating agent to the continuous multifilament strand.

The polymer sheath consists of a thermoplastic polymer composition.

Preferably, the melt flow rate (MFR) of the thermoplastic polymer is in the range from 20 to 150dg/min, preferably in the range from 25 to 120 dg/min, for example in the range from 35 to 100dg/min as measured according to ISO1133 (2.16kg/230°C).

The thermoplastic polymer composition preferably comprises a thermoplastic polymer. Suitable examples of thermoplastic polymers include but are not limited to polyamide, such as polyamide 6, polyamide, 66 or polyamide 46; polyolefins, for example polypropylenes and polyethylenes; polyesters, such as polyethylene terephthalate, polybutylene terephthalate; polycarbonates; polyphenylene sulphide; polyurethanes and and mixtures thereof.

The thermoplastic polymer is preferably a polyolefin, more preferably a polyolefin chosen from the group of polypropylenes or elastomers of ethylene and α-olefin comonomer having 4 to 8 carbon atoms, and any mixtures thereof.

In one embodiment, preferably the thermoplastic polymer composition comprises at least 80wt% of a thermoplastic polymer, for example at least 90wt% polyolefin, at least 93wt%, for example at least 95wt%, for example at least 97wt% of thermoplastic polymer, for example at least 98wt% or for example at least 99wt% of a thermoplastic polymer based on the thermoplastic polymer composition. In a special embodiment, the thermoplastic polymer composition consists of a thermoplastic polymer.

In another embodiment, the thermoplastic polymer composition comprises at least 60wt%, for example at least 70wt%, for example at least 75wt% and/or at most 99wt%, for example at most 95wt%, for example at most 90wt% thermoplastic polymer.

The polypropylene may for example be a propylene homopolymer or a random propylene -α-olefin copolymer or a heterophasic propylene copolymer.

A propylene homopolymer can be obtained by polymerizing propylene under suitable polymerization conditions. A propylene copolymer can be obtained by copolymerizing propylene and one or more other α-olefins, preferably ethylene, under suitable polymerization conditions.The preparation of propylene homopolymers and copolymers is, for example, described in Moore, E. P. (1996) Polypropylene Handbook. Polymerization, Characterization, Properties, Processing, Applications, Hanser Publishers: New York.

The α-olefin in the random propylene α-olefin copolymer is for example an α-olefin chosen from the group of α-olefin having 2 or 4 to 10 C-atoms, preferably ethylene, 1-butene, 1-hexene or any mixtures thereof. The amount of of α-olefin is preferably at most 10wt% based on the propylene α-olefin copolymer, for example in the range from 2-7wt% based on the propylene α-olefin copolymer.

Polypropylenes can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

Heterophasic propylene copolymers are generally prepared in one or more reactors, by polymerization of propylene in the presence of a catalyst and subsequent polymerization of a propylene-α-olefin mixture. The resulting polymeric materials are heterophasic, but the specific morphology usually depends on the preparation method and monomer ratio. The heterophasic propylene copolymer as defined herein consists of a propylene-based matrix and a dispersed ethylene-α-olefin copolymer.

The propylene-based matrix typically forms the continuous phase in the heterophasic propylene copolymer.

The propylene-based matrix consists of a propylene homopolymer and/or a propylene-α-olefin copolymer consisting of at least 70% by mass of propylene and up to 30% by mass of α-olefin, for example ethylene, for example consisting of at least 80% by mass of propylene and up to 20% by mass of α-olefin, for example consisting of at least 90% by mass of propylene and up to 10% by mass of α-olefin, based on the total mass of the propylene-based matrix.

Preferably, the α-olefin in the propylene-α-olefin copolymer is selected from the group of α-olefins having 2 or 4-10 carbon atoms and is preferably ethylene.

Preferably, the propylene-based matrix consists of a propylene homopolymer.

The melt flow index (MFI) of the propylene-based matrix (before it is mixed into the composition of the invention) may be in the range of for example 0.3 to 200dg/min as measured according to ISO1133 (2.16 kg/230°C)..

The propylene-based matrix is for example present in an amount of 50 to 85 wt% based on the total heterophasic propylene copolymer.

Besides the propylene-based matrix, the heterophasic propylene copolymer also consists of a dispersed ethylene-α-olefin copolymer. The dispersed ethylene-α-olefin copolymer is also referred to herein as the 'dispersed phase'. The dispersed phase is embedded in the heterophasic propylene copolymer in a discontinuous form.

The MFI of the dispersed ethylene α-olefin copolymer may vary between wide range and may for example be in the range from for example be in the range from 0.001 to 10dg/min (measured according to ISO1133 (2.16 kg/230°C as calculated using the following formula:

$$MFR\ EPR = 10^{\wedge}(\frac{Log\ MFR\ heterophasic - matrix\ content * Log\ MFR\ PP}{rubber\ content})$$

wherein MFR heterophasic is the melt flow rate of the heterophasic propylene copolymer measured according to ISO1133 (2.16kg/230°C),
MFR PP is the MFR of the propylene-based matrix of the heterophasic propylene copolymer measured according to ISO1133 (2.16kg/230°C)
matrix content is the amount of propylene-based matrix in the heterophasic propylene copolymer in wt% and
rubber content is the amount of ethylene α-olefin copolymer in the heterophasic propylene copolymer in wt%.

The dispersed ethylene-α-olefin copolymer is for example present in an amount of 50 to 15wt% based on the total heterophasic propylene copolymer.

For example, the amount of ethylene in the ethylene-α-olefin copolymer (RCC2) is in the range of 20-65wt% based on the ethylene-α-olefin copolymer.

The amounts of the propylene-based matrix and the dispersed ethylene-α-olefin copolymer, as well as the amount of ethylene in the ethylene α-olefin copolymer may be determined by $^{13}$C-NMR, as is well known in the art.

In the heterophasic polypropylene, the sum of the total weight of the propylene-based matrix and the total weight of the dispersed ethylene-α-olefin copolymer is 100wt%

The α-olefin in the ethylene-α-olefin copolymer is preferably chosen from the group of α-olefins having 3 to 8 carbon atoms and any mixtures thereof, preferably the α-olefin in the ethylene-α-olefin copolymer is chosen from the group of α-olefins having 3 to 4 carbon atoms and any mixture thereof, more preferably the α-olefin is propylene, in which case the ethylene-α-olefin copolymer is ethylene-propylene copolymer. Examples of suitable α-olefins having 3 to 8 carbon atoms, which may be employed as ethylene comonomers to form the ethylene α-olefin copolymer include but are not limited to propylene, 1-butene, 1-pentene, 4-methyl-1-pentene, 1-hexen, 1-heptene and 1-octene.

The elastomer of ethylene and α-olefin comonomer having 4 to 8 carbon atoms may for example have a density in the range from 0.850 to 0.915 g/cm$^3$. Such elastomers are sometimes also referred to as plastomers.

The α-olefin comonomer in the elastomer is preferably an acyclic monoolefin such as 1-butene, 1-pentene, 1-hexene, 1-octene, or 4-methylpentene.

Accordingly, the elastomer is preferably selected from the group consisting of ethylene-1-butene copolymer , ethylene-1-hexene copolymer, ethylene-1-octene copolymer and mixtures thereof, more preferably wherein the elastomer is selected from ethylene-1-octene copolymer. Most preferably, the elastomer is an ethylene-1-octene copolymer.

Preferably, the density of the elastomer is at least 0.865 g/cm$^3$ and/or at most 0.910 g/cm$^3$. For example, the density of the elastomer is at least 0.850, for example at least 0.865, for example at least 0.88, for example at least 0.90 and/or for example at most 0.915, for example at most 0.910, for example at most 0.907, for example at most 0.906 g/cm$^3$. More preferable the density of the elastomer is in the range from 0.88 up to an including 0.907 g/cm$^3$, most preferably, the density of the elastomer is in the range from 0.90 up to and including 0.906 g/cm$^3$.

Elastomers which are suitable for use in the current invention are commercially available for example under the trademark EXACT™ available from Exxon Chemical Company of Houston, Texas or under the trademark ENGAGE™ polymers, a line of metallocene catalyzed plastomers available from Dow Chemical Company of Midland, Michigan or under the trademark TAFMER™ available from MITSUI Chemicals Group of Minato Tokyo or under the trademark Nexlene™ from SK Chemicals.

The elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomer s may also be prepared using traditional types of heterogeneous multi-sited Ziegler-Natta catalysts.

Preferably, the elastomer has a melt flow index of 0.1 to 40 dg/min (ISO1133, 2.16kg, 190°C), for example at least 1 dg/min and/or at most 35 dg/min. More preferably, the elastomer has a melt flow index of at least 1.5 dg/min, for example of at least 2 dg/min, for example of at least 2.5 dg/min, for example of at least 3 dg/min, more preferably at least 5 dg/min and/or preferably at most 30 dg/min, more preferably at most 20 dg/min, more preferably at most 10 dg/min measured in accordance with ISO 1133 using a 2.16 kg weight and at a temperature of 190 °C.

Preferably, the amount of ethylene incorporated into the elastomer is at least 50 mol %. More preferably, the amount of ethylene incorporated into the elastomer is at least 57 mol%, for example at least 60 mol %, at least 65 mol% or at least 70 mol%. Even more preferably, the amount of ethylene incorporated into the elastomer is at least 75 mol%. The amount of ethylene incorporated into the elastomer may typically be at most 97.5 mol%, for example at most 95 mol% or at most 90 mol%.

The thermoplastic polymer composition may contain the usual additives, for instance nucleating agents and clarifiers, stabilizers, release agents, fillers, peroxides, plasticizers, anti-oxidants, lubricants, antistatics, cross linking agents, scratch resistance agents, high performance fillers, pigments and/or colorants, impact modifiers, flame retardants, blowing agents, acid scavengers, recycling additives, coupling agents, antimicrobials, anti-fogging additives, slip additives, anti-blocking additives, polymer processing aids and the like. Such additives are well known in the art. The skilled person will know how to choose the type and amount of additives such that they do not detrimentally influence the aimed properties. In a special embodiment, the thermoplastic polymer composition consists of the thermoplastic polymer and additives.

Preferably, the amount of impregnated continuous multifilament strand is in the range of 10 to 70wt%, for example in the range from 15 to 70 wt%, for example in the range from 20 to 70 wt% or for example in the range from 25 to 70wt% based on the sheathed continuous multifilament strands. Preferably, the sum of the amount of impregnated continuous multifilament strand and the polymer sheath is 100wt%.

Although the invention has been described in detail for purposes of illustration, it is understood that such detail is solely for that purpose and variations can be made therein by those skilled in the art without departing from the scope of the invention as defined in the claims.

It is further noted that the term 'comprising' does not exclude the presence of other elements. However, it is also to be understood that a description on a product/composition comprising certain components also discloses a product/-composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

**Claims**

1. A process for the production of a tape comprising a plurality of impregnated continuous multifilament strands and a polymer sheath which intimately surrounds the plurality of impregnated continuous multifilament strands, wherein each of the plurality of impregnated multifilament strands extends in the longitudinal direction,

   wherein each of the plurality of impregnated continuous multifilament strands comprises at least one continuous glass multifilament strand, wherein the at least one continuous glass multifilament strand is impregnated with an impregnating agent,
   wherein the process comprising the steps of

   a) unwinding from a package the continuous glass multifilament strands,
   b) applying the impregnating agent to the continuous glass multifilament strands to form the plurality of impregnated continuous multifilament strands,
   c) placing the plurality of impregnated continuous multifilament strands in parallel alignment in the longitudinal direction and
   d) applying a sheath of a thermoplastic polymer composition around the plurality of impregnated continuous multifilament strands of step c) to form the tape,

   wherein steps c) and d) are performed in a die having a guiding means arranged for placing the plurality of impregnated continuous multifilament strands in parallel alignment in the longitudinal direction, wherein the plurality of impregnated continuous multifilament strands pass through a melt of the thermoplastic polymer composition inside of the die downstream of the guiding means, **characterized in that**
   the guiding means is provided with one extended hole having an elliptical cross section, wherein the extended hole is arranged for accommodating the plurality of impregnated continuous multifilament strands in one plane.

2. The process according to claim 1, wherein the number of the impregnated continuous multifilament strands in the plurality of the impregnated continuous multifilament strands is at least 4, for example the number of impregnated continuous multifilament strands in the plurality of the impregnated continuous multifilament strands is in the range between 4 to 40, preferably in the range between 4 to 24.

3. The process according to claim 1 or claim 2, wherein the guiding means is provided with a plurality of extended holes in parallel alignment in the longitudinal direction and arranged in one plane, wherein each of the extended holes is arranged for accommodating one impregnated continuous multifilament strand.

4. The process according to any one of claims 1-3, further comprising the step e) of applying pressure and optional heat to the tape obtained by step d) preferably by steps of

   e1) applying pressure on while optionally heating the tape and
   e2) cooling and solidifying the product obtained by step e1), e.g. by chill rolls, a water bath, a blower a fan or a high speed air knife,
   wherein step e1) is preferably performed by sequential steps of
   e1a) maintaining the tape of step d) in its melted state, e.g. by subjecting the tape of step d) to an elevated temperature, e.g. by hot rolls, flat belts, an oven or a belt press and
   e2a) applying pressure on the tape obtained by step d) to adjust the thickness of the tape and compact the tape, e.g. by calendaring rolls.

5. The process according to claim 4, wherein the process further comprises step f) of cutting the tape obtained by step e) into desired length and wherein the tape obtained by step d) is subjected to step e) without cutting.

6. The process according to any one of claims 1-3, further comprising the step step g) of cutting the tape obtained by step d) into desired length.

7. The process according to claim 6, further comprising the step h) of applying heat and pressure to the tape obtained by step g) preferably by sequential steps of

   g1) heating and applying pressure on the tape and
   g2) cooling and solidifying the product obtained by step g1), e.g. by chill rolls, a water bath, a blower a fan or a high speed air knife, wherein g1) is preferably performed by sequential steps of
   g1a) melting the tape of step d), e.g. by hot rolls, flat belts, an oven or a belt press and
   g2a) applying pressure on the product obtained by step g1a) to adjust the thickness of the tape and compact the tape, e.g. by calendaring rolls.

8. The process according to any one of the preceding claims, wherein the continuous glass multifilament strands unwound in step a) and the impregnated continuous multifilament strands formed in step b) are not cut during steps a)-d).

9. The process according to any one of the preceding claims,

   wherein the amount of impregnating agent is 0.50 to 18 wt%, for example from 0.5 to 10.0 wt% or for example from 10.0 to 18.0 wt%, more preferably 1.5 to 8wt%, even more preferably in the range from 2.5 wt% to 6.0 wt% based on the sheathed continuous multifilament strand,
   wherein the impregnating agent has a melting point of at least 20°C below the melting point of the thermoplastic polymer composition and has a viscosity of from 2.5 to 200cSt at 160°C as measured according to ASTM D 3236-15, wherein the continuous glass multifilament strand comprises at most 2 wt% of a sizing composition based on the continuous glass multifilament strand, and/or wherein the sheath consists of a thermoplastic polymer composition, wherein the thermoplastic polymer composition comprises at least 60wt%, for example at least 80wt% of a thermoplastic polymer,
   wherein the amount of the impregnated continuous multifilament strand is in the range of 10 to 70 wt%, for example 25 to 70 wt%, based on the sheathed continuous multifilament strand and wherein the amount of the sheath is in the range of 30 to 90wt%, for example 30 to 75 wt%, based on the sheathed continuous multifilament strand and wherein the sum of the amount of impregnated continuous multifilament strand and the sheath is 100wt%.

10. The process according to any one of the preceding claims,

wherein the thermoplastic polymer is a polyolefin, preferably wherein the polyolefin is chosen from the group of polypropylenes or elastomers of ethylene and α-olefin comonomer having 4 to 8 carbon atoms, and any mixtures thereof, wherein the melt flow rate of the thermoplastic polymer composition is in the range from 20 to 150 dg/min, preferably in the range from 25 to 120 dg/min , for example in the range from 35 to 100 dg/min as measured according to ISO1133 (2.16kg/230°C),

wherein the thermoplastic polymer composition comprises at least 80wt% of the thermoplastic polymer, for example at least 90wt% polyolefin, at least 93wt%, for example at least 95wt%, for example at least 97wt% of thermoplastic polymer, for example at least 98wt% or for example at least 99wt% of a thermoplastic polymer based on the thermoplastic polymer composition.

## Patentansprüche

1. Prozess zur Herstellung eines Bandes, das eine Vielzahl von imprägnierten kontinuierlichen Multifilamentsträngen und eine Polymerhülle, die die Vielzahl von imprägnierten kontinuierlichen Multifilamentsträngen eng umgibt, umfasst,

   wobei sich jeder der Vielzahl von imprägnierten Multifilamentsträngen in der Längsrichtung erstreckt,
   wobei jeder der Vielzahl von imprägnierten kontinuierlichen Multifilamentsträngen mindestens einen kontinuierlichen Glasmultifilamentstrang umfasst, wobei der mindestens eine kontinuierliche Glasmultifilamentstrang mit einem Imprägniermittel imprägniert ist,
   wobei der Prozess die folgenden Schritte umfasst

   a) Abwickeln der kontinuierlichen Glasmultifilamentstränge von einem Wickelkörper;
   b) Aufbringen des Imprägniermittels auf die kontinuierlichen Glasmultifilamentstränge, um die Vielzahl von imprägnierten kontinuierlichen Multifilamentsträngen zu bilden,
   c) Platzieren der Vielzahl von imprägnierten kontinuierlichen Multifilamentsträngen in paralleler Ausrichtung in der Längsrichtung und
   d) Aufbringen einer Hülle aus einer thermoplastischen Polymerzusammensetzung um die Vielzahl von imprägnierten kontinuierlichen Multifilamentsträngen von Schritt c), um das Band zu bilden,

   wobei die Schritte c) und d) in einer Düse durchgeführt werden, die ein Führungsmittel aufweist, das zum Platzieren der Vielzahl von imprägnierten kontinuierlichen Multifilamentsträngen in paralleler Ausrichtung in der Längsrichtung angeordnet ist, wobei die Vielzahl von imprägnierten kontinuierlichen Multifilamentsträngen eine Schmelze der thermoplastischen Polymerzusammensetzung innerhalb der Düse stromabwärts des Führungsmittels durchläuft,
   **dadurch gekennzeichnet, dass** das Führungsmittel mit einem verlängerten Loch bereitgestellt ist, das einen elliptischen Querschnitt aufweist, wobei das verlängerte Loch zum Aufnehmen der Vielzahl von imprägnierten kontinuierlichen Multifilamentsträngen in einer Ebene angeordnet ist.

2. Prozess nach Anspruch 1, wobei die Anzahl der imprägnierten kontinuierlichen Multifilamentstränge in der Vielzahl der imprägnierten kontinuierlichen Multifilamentstränge mindestens 4 beträgt, zum Beispiel die Anzahl der imprägnierten kontinuierlichen Multifilamentstränge in der Vielzahl der imprägnierten kontinuierlichen Multifilamentstränge im Bereich zwischen 4 bis 40, bevorzugt im Bereich zwischen 4 bis 24 liegt.

3. Prozess nach Anspruch 1 oder Anspruch 2, wobei das Führungsmittel mit einer Vielzahl von verlängerten Löchern in paralleler Ausrichtung in der Längsrichtung bereitgestellt und in einer Ebene angeordnet ist, wobei jedes der verlängerten Löcher zum Aufnehmen eines imprägnierten kontinuierlichen Multifilamentstrangs angeordnet ist.

4. Prozess nach einem der Ansprüche 1-3, weiter umfassend den Schritt e) des Anwendens von Druck und optional von Wärme auf das durch Schritt d) erhaltene Band, bevorzugt durch die folgenden Schritte

   e1) Anwenden von Druck auf das Band, während es optional erwärmt wird, und
   e2) Kühlen und Verfestigen des durch Schritt e1) erhaltenen Produkts, z. B. durch Kühlwalzen, ein Wasserbad, ein Gebläse, einen Lüfter oder ein Hochgeschwindigkeits-Luftmesser,
   wobei Schritt e1) bevorzugt durch die folgenden aufeinanderfolgenden Schritte durchgeführt wird
   e1a) Halten des Bandes von Schritt d) in seinem geschmolzenen Zustand, z. B. durch Aussetzen des Bandes von Schritt d) einer erhöhten Temperatur, z. B. durch Warmwalzen, Flachriemen, einen Ofen oder eine Bandpresse, und

e2a) Anwenden von Druck auf das durch Schritt d) erhaltene Band, um die Dicke des Bandes anzupassen und das Band zu verdichten, z. B. durch Kalanderwalzen.

5. Prozess nach Anspruch 4, wobei der Prozess weiter Schritt f) des Schneidens des durch Schritt e) erhaltenen Bandes in die gewünschte Länge umfasst und wobei das durch Schritt d) erhaltene Band Schritt e) ohne Schneiden unterzogen wird.

6. Prozess nach einem der Ansprüche 1-3, weiter umfassend den Schritt g) des Schneidens des durch Schritt d) erhaltenen Bandes in die gewünschte Länge.

7. Prozess nach Anspruch 6, weiter umfassend den Schritt h) des Anwendens von Wärme und Druck auf das durch Schritt g) erhaltene Band, bevorzugt durch die folgenden aufeinanderfolgenden Schritte

g1) Erwärmen und Anwenden von Druck auf das Band und
g2) Kühlen und Verfestigen des durch Schritt g1) erhaltenen Produkts, z. B. durch Kühlwalzen, ein Wasserbad, ein Gebläse, einen Lüfter oder ein Hochgeschwindigkeits-Luftmesser, wobei g1) bevorzugt durch die folgenden aufeinanderfolgenden Schritte durchgeführt wird
g1a) Schmelzen des Bandes von Schritt d), z. B. durch Warmwalzen, Flachriemen, einen Ofen oder eine Bandpresse und
g2a) Anwenden von Druck auf das durch Schritt g1a) erhaltene Produkt, um die Dicke des Bandes anzupassen und das Band zu verdichten, z. B. durch Kalanderwalzen.

8. Prozess nach einem der vorstehenden Ansprüche, wobei die in Schritt a) abgewickelten kontinuierlichen Glasmultifilamentstränge und die in Schritt b) gebildeten imprägnierten kontinuierlichen Multifilamentstränge während der Schritte a)-d) nicht geschnitten werden.

9. Prozess nach einem der vorstehenden Ansprüche,

wobei die Menge an Imprägniermittel 0,50 bis 18 Gew.-%, zum Beispiel von 0,5 bis 10,0 Gew.-% oder zum Beispiel von 10,0 bis 18,0 Gew.-%, bevorzugter 1,5 bis 8 Gew.-%, noch bevorzugter im Bereich von 2,5 bis 6,0 Gew.-% bezogen auf den umhüllten kontinuierlichen Multifilamentstrang beträgt,
wobei das Imprägniermittel einen Schmelzpunkt von mindestens 20 °C unter dem Schmelzpunkt der thermoplastischen Polymerzusammensetzung aufweist und eine Viskosität von 2,5 bis 200 cSt bei 160 °C aufweist, wie gemessen nach ASTM D 3236-15,
wobei der kontinuierliche Glasmultifilamentstrang höchstens 2 Gew.-% einer Schlichtezusammensetzung bezogen auf den kontinuierlichen Glasmultifilamentstrang umfasst, und/oder wobei die Hülle aus einer thermoplastischen Polymerzusammensetzung besteht, wobei die thermoplastische Polymerzusammensetzung mindestens 60 Gew.-%, zum Beispiel mindestens 80 Gew.-% eines thermoplastischen Polymers umfasst,
wobei die Menge des imprägnierten kontinuierlichen Multifilamentstrangs im Bereich von 10 bis 70 Gew.-%, zum Beispiel 25 bis 70 Gew.-% bezogen auf den umhüllten kontinuierlichen Multifilamentstrang liegt und wobei die Menge der Hülle im Bereich von 30 bis 90 Gew.-%, zum Beispiel 30 bis 75 Gew.-% bezogen auf den umhüllten kontinuierlichen Multifilamentstrang liegt und wobei die Summe der Menge des imprägnierten kontinuierlichen Multifilamentstrangs und der Hülle 100 Gew.-% beträgt.

10. Prozess nach einem der vorstehenden Ansprüche,

wobei das thermoplastische Polymer ein Polyolefin ist, wobei das Polyolefin bevorzugt ausgewählt ist aus der Gruppe von Polypropylenen oder Elastomeren aus Ethylen und $\alpha$-Olefin-Comonomern mit 4 bis 8 Kohlenstoffatomen und beliebigen Mischungen davon, wobei die Schmelzflussrate der thermoplastischen Polymerzusammensetzung im Bereich von 20 bis 150 dg/min, bevorzugt im Bereich von 25 bis 120 dg/min, zum Beispiel im Bereich von 35 bis 100 dg/min liegt, wie gemessen nach IS01133 (2,16 kg/230 °C),
wobei die thermoplastische Polymerzusammensetzung mindestens 80 Gew.-% des thermoplastischen Polymers, zum Beispiel mindestens 90 Gew.-% Polyolefin, mindestens 93 Gew.-%, zum Beispiel mindestens 95 Gew.-%, zum Beispiel mindestens 97 Gew.-% thermoplastisches Polymer, zum Beispiel mindestens 98 Gew.-% oder zum Beispiel mindestens 99 Gew.-% eines thermoplastischen Polymers bezogen auf die thermoplastische Polymerzusammensetzung umfasst.

**EP 3 969 251 B1**

**Revendications**

1. Procédé de production d'une bande comprenant une pluralité de brins multifilament continus imprégnés et une gaine polymère qui entoure intimement la pluralité de brins multifilament continus imprégnés,

   dans lequel chacun de la pluralité de brins multifilament imprégnés s'étend dans la direction longitudinale,
   dans lequel chacun de la pluralité de brins multifilament continus imprégnés comprend au moins un brin multifilament continu en verre, dans lequel le au moins un brin multifilament continu en verre est imprégné d'un agent d'imprégnation,
   dans lequel le procédé comprend les étapes consistant à

   a) dérouler les brins multifilament continus en verre à partir d'une bobine,
   b) appliquer l'agent d'imprégnation aux brins multifilament continus en verre pour former la pluralité de brins multifilament continus imprégnés,
   c) disposer la pluralité de brins multifilament continus imprégnés en alignement parallèle dans la direction longitudinale et
   d) appliquer une gaine d'une composition polymère thermoplastique autour de la pluralité de brins multifilament continus imprégnés de l'étape c) pour former la bande,

   dans lequel les étapes c) et d) sont réalisées dans une filière présentant un moyen de guidage agencé pour disposer la pluralité de brins multifilament continus imprégnés en alignement parallèle dans la direction longitudinale, dans lequel la pluralité de brins multifilament continus imprégnés passent à travers une masse fondue de la composition polymère thermoplastique à l'intérieur de la filière en aval du moyen de guidage, **caractérisé en ce que** le moyen de guidage est pourvu d'un orifice allongé présentant une section transversale elliptique, dans lequel l'orifice allongé est agencé pour recevoir la pluralité de brins multifilament continus imprégnés dans un plan.

2. Procédé selon la revendication 1, dans lequel le nombre de brins multifilament continus imprégnés dans la pluralité de brins multifilament continus imprégnés est d'au moins 4, par exemple le nombre de brins multifilament continus imprégnés dans la pluralité de brins multifilament continus imprégnés est dans la plage entre 4 et 40, de préférence dans la plage entre 4 et 24.

3. Procédé selon la revendication 1 ou 2, dans lequel le moyen de guidage est pourvu d'une pluralité d'orifices allongés en alignement parallèle dans la direction longitudinale et agencé dans un plan, dans lequel chacun des orifices allongés est agencé pour recevoir un brin multifilament continu imprégné.

4. Procédé selon l'une quelconque des revendications 1-3, comprenant en outre l'étape e) consistant à appliquer une pression et éventuellement de la chaleur à la bande obtenue à l'étape d), de préférence par les étapes consistant à

   e1) appliquer une pression tout en chauffant éventuellement la bande et
   e2) refroidir et solidifier le produit obtenu à l'étape e1), par exemple au moyen de rouleaux refroidisseurs, d'un bain d'eau, d'un souffleur, d'un ventilateur ou d'une lame d'air à grande vitesse,
   dans lequel l'étape e1) est de préférence réalisée par les étapes séquentielles consistant à
   e1a) maintenir la bande de l'étape d) dans son état fondu, par exemple en soumettant la bande de l'étape d) à une température élevée, par exemple au moyen de rouleaux chauds, de bandes plates, d'un four ou d'une presse à bande et
   e2a) appliquer une pression sur la bande obtenue à l'étape d) pour ajuster l'épaisseur de la bande et compacter la bande, par exemple au moyen de rouleaux calandrants.

5. Procédé selon la revendication 4, dans lequel le procédé comprend en outre l'étape f) consistant à découper la bande obtenue par l'étape e) à la longueur souhaitée et dans lequel la bande obtenue par l'étape d) est soumise à l'étape e) sans découpe.

6. Procédé selon l'une quelconque des revendications 1-3, comprenant en outre l'étape g) consistant à découper la bande obtenue à l'étape d) à la longueur souhaitée.

7. Procédé selon la revendication 6, comprenant en outre l'étape h) consistant à appliquer de la chaleur et de la pression sur la bande obtenue à l'étape g), de préférence par les étapes séquentielles consistant à

14

g1) chauffer et appliquer une pression sur la bande et

g2) refroidir et solidifier le produit obtenu à l'étape g1), par exemple au moyen de rouleaux refroidisseurs, d'un bain d'eau, d'un souffleur, d'un ventilateur ou d'une lame d'air à grande vitesse, dans lequel g1) est de préférence réalisée par les étapes séquentielles consistant à

g1a) faire fondre la bande de l'étape d), par exemple au moyen de rouleaux chauds, de bandes plates, d'un four ou d'une presse à bande et

g2a) appliquer une pression sur le produit obtenu à l'étape g1a) pour ajuster l'épaisseur de la bande et compacter la bande, par exemple au moyen de rouleaux calandrants.

8.  Procédé selon l'une quelconque des revendications précédentes, dans lequel les brins multifilament continus en verre déroulés à l'étape a) et les brins multifilament continus imprégnés formés à l'étape b) ne sont pas coupés pendant les étapes a) à d).

9.  Procédé selon l'une quelconque des revendications précédentes,

dans lequel la quantité d'agent d'imprégnation est de 0,50 à 18 % en poids, par exemple de 0,5 à 10,0 % en poids ou par exemple de 10,0 à 18,0 % en poids, plus préférentiellement de 1,5 à 8 % en poids, encore plus préférentiellement dans la plage de 2,5 % en poids à 6,0 % en poids sur la base du brin multifilament continu gainé,

dans lequel l'agent d'imprégnation présente un point de fusion d'au moins 20 °C en dessous du point de fusion de la composition polymère thermoplastique et présente une viscosité de 2,5 à 200 cSt à 160 °C tels que mesurés selon la norme ASTM D 3236-15,

dans lequel le brin multifilament continu en verre comprend au plus 2 % en poids d'une composition d'ensimage basée sur le brin multifilament continu en verre, et/ou dans lequel la gaine consiste en une composition polymère thermoplastique, dans lequel la composition polymère thermoplastique comprend au moins 60 % en poids, par exemple au moins 80 % en poids d'un polymère thermoplastique,

dans lequel la quantité du brin multifilament continu imprégné est dans la plage de 10 à 70 % en poids, par exemple de 25 à 70 % en poids, sur la base du brin multifilament continu gainé et dans lequel la quantité de la gaine est dans la plage de 30 à 90 % en poids, par exemple de 30 à 75 % en poids, sur la base du brin multifilament continu gainé et dans lequel la somme de la quantité du brin multifilament continu imprégné et de la gaine est de 100 % en poids.

10. Procédé selon l'une quelconque des revendications précédentes,

dans lequel le polymère thermoplastique est une polyoléfine, de préférence dans lequel la polyoléfine est choisie dans le groupe des polypropylènes ou des élastomères d'éthylène et d'un comonomère d'a-oléfine présentant de 4 à 8 atomes de carbone, et leurs mélanges, dans lequel l'indice de fluidité à chaud de la composition polymère thermoplastique est dans la plage de 20 à 150 dg/min, de préférence dans la plage de 25 à 120 dg/min, par exemple dans la plage de 35 à 100 dg/min, tel que mesuré selon la norme ISO1133 (2,16 kg/230 °C).

dans lequel la composition polymère thermoplastique comprend au moins 80 % en poids du polymère thermoplastique, par exemple au moins 90 % en poids de polyoléfine, au moins 93 % en poids, par exemple au moins 95 % en poids, par exemple au moins 97 % en poids de polymère thermoplastique, par exemple au moins 98 % en poids ou par exemple au moins 99 % en poids d'un polymère thermoplastique basé sur la composition de polymère thermoplastique.

**EP 3 969 251 B1**

**REFERENCES CITED IN THE DESCRIPTION**

**Patent documents cited in the description**

- WO 2016142784 A1
- US 3993726 A
- WO 2011163365 A2
- WO 2011156693 A2
- WO 2009080281 A1
- EP 1460166 A1
- EP 0206189 A1
- US 4338233 A
- EP 0921919 B1
- EP 0994978 B1
- EP 0397505 B1
- WO 2014053590 A1
- US 5017714 A
- US 5324820 A